(19) Europäisches Patentamt
European Patent Office
Office européen des brevets

(11) **EP 2 937 988 B1**

(12) **FASCICULE DE BREVET EUROPEEN**

(45) Date de publication et mention de la délivrance du brevet:
**20.11.2019 Bulletin 2019/47**

(51) Int Cl.:
*H02P 1/04* *(2006.01)*    *H02P 1/28* *(2006.01)*

(21) Numéro de dépôt: **15164515.7**

(22) Date de dépôt: **21.04.2015**

(54) **PROCÉDÉ DE DÉMARRAGE D'UN MOTEUR ALTERNATIF, DISPOSITIF DE DÉMARRAGE ET PRODUIT PROGRAMME D'ORDINATEUR**

ANLASSVERFAHREN EINES HUBMOTORS, ANLASSVORRICHTUNG UND COMPUTERPROGRAMMPRODUKT

METHOD FOR STARTING AN AC MOTOR, STARTER DEVICE AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2014 FR 1453654**

(43) Date de publication de la demande:
**28.10.2015 Bulletin 2015/44**

(73) Titulaire: **Schneider Electric Industries SAS 92500 Rueil-Malmaison (FR)**

(72) Inventeurs:
• **Durand, Christophe 38050 Grenoble Cedex 9 (FR)**
• **Penkov, Delcho 38050 Grenoble Cedex 9 (FR)**

(74) Mandataire: **Brevalex 95, rue d'Amsterdam 75378 Paris Cedex 8 (FR)**

(56) Documents cités:
EP-A2- 2 403 132    JP-A- 2008 043 140
US-A1- 2009 058 341    US-A1- 2011 148 332
US-A1- 2011 276 301

EP 2 937 988 B1

**Description**

**DOMAINE TECHNIQUE**

L'invention se rapporte au domaine des moteurs électriques alimentés par des tensions alternatives et plus particulièrement aux procédés de démarrage de tels moteurs.

**ÉTAT DE LA TECHNIQUE ANTÉRIEURE**

Il est connu pour limiter l'appel de courants lors des démarrages de moteurs électriques alternatifs de prévoir un dispositif de démarrage tel qu'un démarreur électronique.

Un tel dispositif de démarrage se place entre le circuit d'alimentation alternatif et le moteur et permet de réduire l'alimentation en courant du moteur, ceci au moyen d'une alimentation progressive en courant. Pour ce faire, le dispositif comporte, pour chaque phase du circuit d'alimentation, au moins un interrupteur commandé permettant de connecter et déconnecter le moteur de ladite phase du circuit d'alimentation. En fonctionnement et pour chacune des phases du circuit d'alimentation, le moteur est reconnecté au circuit d'alimentation avec un retard limitant ainsi le temps d'alimentation du moteur et donc la montée en courant à chaque période de la tension d'alimentation. L'appel de courant est ainsi évité.

Généralement, les interrupteurs d'un tel dispositif de démarrage comportent, pour chacune des phases du circuit d'alimentation, un premier et un deuxième thyristor connectés en tête bêche et qui sont aptes à connecter le moteur à ladite phase respectivement en alternance positive et négative en tension de cette dernière. A chaque alternance du courant traversant le thyristor, la gâchette du thyristor correspondant est alimentée avec un retard vis-à-vis de l'alternance en tension correspondante de manière à générer une interruption de courant d'une durée variable par le thyristor et connecter avec retard le moteur à la tension d'alimentation fournissant ainsi l'alimentation en courant réduit du moteur.

L'ajustement de ce retard d'alimentation de la gâchette peut être soit du type alpha (a), c'est-à-dire que la gâchette est alimentée avec un retard correspondant à un angle $\alpha$ après le passage à zéro de la tension de la phase correspondante, soit du type gamma (y), c'est-à-dire que la gâchette est alimentée avec un retard correspondant à un angle y après le passage à zéro du courant de la phase correspondante. Que ce soit l'angle a, ou l'angle y, ces deux retards, qui correspondent respectivement à des temps de $\alpha T/2\pi$ et $\gamma T/2\pi$. avec T la période de la tension d'alimentation, correspondent à un retard $t_{ret}$ d'alimentation en courant du moteur.

Néanmoins, quel que soit le type d'ajustement choisi, le réglage du retard d'alimentation est primordial, ceci en particulier dans les premiers instants du démarrage du moteur. En effet, un retard $t_{ret}$ trop important empêche tout démarrage du moteur tandis qu'un retard $t_{ret}$ trop court ne permet pas d'obtenir une réduction significative de l'appel de courants au démarrage du moteur.

Ainsi, afin de réguler au mieux le retard $t_{ret}$ d'alimentation en courant du moteur, que ce soit au premier instant du démarrage ou dans la suite du démarrage, il est connu du document EP 2403132 A2 un procédé d'ajustement du retard $t_{ret}$ en fonction de la fréquence de rotation du moteur. Pour ce faire, ce document décrit deux séquences successives lors du démarrage d'un moteur, une première dédiée aux basses vitesses, dans laquelle il est utilisé un algorithme Volt par Hertz (appelé algorithme boucle ouverte) pour déterminer la vitesse du moteur et une deuxième séquence dédiée aux hautes vitesses dans laquelle la fréquence de rotation du moteur est déterminée par une comparaison de la commande de la vitesse du moteur et de la vitesse réelle ou estimée.

Néanmoins, si le procédé décrit dans EP 2403132 A2 permet un démarrage adéquat du moteur, il reste lourd à mettre en œuvre. En effet, un tel procédé fait appel à deux séquences de fonctionnement différentes et de plus, nécessite la mise en place d'une séquence de transition relativement complexe. En outre, pour réaliser ces deux séquences, il est nécessaire de contrôler à la fois la tension et le courant du circuit d'alimentation et ceux du moteur, ce qui complexifie significativement le dispositif de démarrage.

Il est également connu du document US 2011/148332 un procédé de démarrage d'un moteur électrique basé sur une alimentation retardé du moteur. Ce procédé utilisant une mesure de la vitesse du moteur pour contrôler ladite alimentation retardée.

**EXPOSÉ DE L'INVENTION**

L'invention a pour objet de résoudre un tel inconvénient et se donne ainsi pour but de fournir un procédé de démarrage d'un moteur qui, tout en permettant, au moins dans les premiers instant du démarrage, de définir un retard $t_{ret}$ en alimentation optimisé, ne nécessite pas de complexifier le dispositif de démarrage comme cela est le cas pour le procédé de l'art antérieur.

A cet effet, l'invention concerne un procédé de démarrage d'un moteur électrique conforme à la revendication 1.

De plus le procédé reposant simplement sur un calcul de variation de résistance, il est robuste vis-à-vis des éventuels changements ou dérives du circuit d'alimentation contrairement au procédé de l'art antérieur.

L'étape a) est une étape de détermination d'une variation temporelle relative de la résistance du moteur

$$\frac{\frac{\Delta R}{R}(t)}{\Delta t},$$

ladite variation temporelle relative étant préférentiellement calculée à partir de l'équation suivante :

$$\frac{\dfrac{\Delta R}{R}(t)}{\Delta t} = \frac{\dfrac{R(t) - R(t-nT)}{R(t-nT)}}{nT}$$

avec R(t) une valeur relative à la résistance du moteur déterminée à un instant t et T la durée d'une période de la tension d'alimentation alternative.

Les étapes a) à c) sont mises en oeuvre qu'après une durée initiale $t_{int}1$.

Un tel temps d'initialisation pendant lequel il n'y a pas de réajustement du retard $t_{ret}$, permet de ne pas prendre en compte les régimes transitoires liés au démarrage de l'alimentation du moteur.

Après une diminution du retard $t_{ret}$, la première séquence peut être répétée après un temps d'attente $t_{int}2$ préférentiellement égal à $t_{int}1$.

Avec un tel deuxième temps d'initialisation, il est possible d'éviter la prise en compte des régimes transitoires qui pourraient perturber le procédé selon l'invention.

La première séquence peut comporter l'étape supplémentaire suivante:

> a) si la valeur de la variation de la résistance du moteur déterminée est égale ou est supérieure à la première valeur seuil, passer à une deuxième séquence du procédé de démarrage,

ladite deuxième séquence comportant les étapes suivantes réalisées toutes les $m^{ièmes}$ périodes de la tension d'alimentation, m étant un entier supérieur à 0 :

> b) détermination de la valeur d'une variation de la résistance du moteur,
> c) comparaison de ladite valeur de variation de la résistance du moteur déterminée avec une deuxième valeur seuil de résistance,
> d) si la variation de résistance du moteur déterminée est inférieure à la deuxième valeur seuil de résistance, diminution de $t_{ret}$.

Une telle deuxième phase permet de mieux réguler l'appel en courant du moteur après que ce dernier est commencé à tourner.

Lors de l'étape e) il peut également être déterminé à partir de la variation de la résistance du moteur une accélération ou une vitesse du moteur.

Par déterminé, il faut entendre bien entendu estimé. La résistance du moteur variant avec sa vitesse, il peut donc être estimé à partir de la résistance du moteur si le moteur accélère ou décélère et même une vitesse de rotation de ce dernier.

Dans l'étape e) la variation de la valeur résistance déterminée peut être une valeur corrigée sur au moins deux périodes de la tension d'alimentation.

L'étape f) peut être une étape de détermination de la valeur de variation temporelle relative de la résistance du moteur préférentiellement calculée à partir de l'équation suivante :

$$\frac{\dfrac{\Delta R}{R}(t)}{\Delta t} = \frac{\dfrac{R(t) - R(t-mT)}{R(t-mT)}}{mT}$$

avec R(t) la valeur résistance du moteur déterminée à un instant t et T la durée d'une période de la tension d'alimentation alternative.

Il peut en outre être prévu dans la deuxième séquence l'étape supplémentaire suivante :

> e) comparaison du courant d'alimentation du moteur à l'instant t par rapport à la valeur du courant d'alimentation du moteur à l'instant t-mT avec T la durée d'une période de la tension d'alimentation alternative,
> f) si le courant d'alimentation du moteur à l'instant t est inférieur à la valeur du courant d'alimentation du moteur à l'instant t-mT, connecter directement le moteur au circuit d'alimentation, le moteur étant alors démarré.

De telles étapes permettent une bonne détection du démarrage du moteur et donc une transition optimisée entre l'alimentation du démarrage du moteur selon l'invention et l'alimentation normale du moteur.

Si à l'étape g) le retard $t_{ret}$ est diminué et la deuxième valeur seuil de résistance augmentée, il peut être prévu un temps d'attente $t_{int}3$ avant de répéter la deuxième séquence.

L'invention concerne également un dispositif de démarrage d'un moteur électrique alimenté par une tension d'alimentation alternative, ledit dispositif comportant :

- des moyens de retard de l'alimentation du moteur adapté pour retarder l'alimentation du moteur avec un retard $t_{ret}$,
- des moyens de mesure courant d'alimentation du moteur en aval ou en amont des moyens de retard,
- des moyens de détermination de la tension d'alimentation du moteur en amont ou en aval des moyens de retard,
- une unité de traitement et de commande adaptée pour commander les moyens de retard, de détermination du courant et de détermination de la tension,

L'unité de traitement et de commande étant adaptée pour déterminer à partir des moyens de détermination du courant et de la tension d'alimentation du moteur la variation de résistance du moteur et pour modifier le retard $t_{ret}$ en fonction de la variation de résistance du moteur suivant un procédé selon l'invention.

Un tel dispositif de démarrage permet un démarrage optimisé du moteur.

L'invention concerne également un produit programme d'ordinateur comportant des instructions de code de programme pour l'exécution des étapes de détermination d'une variation d'une résistance du moteur, de comparaison de ladite variation à une valeur seuil de résistance et de diminution du retard $t_{ret}$ si la variation est inférieure à la valeur seuil selon l'invention.

## BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :

- la figure 1 illustre un exemple de circuit d'alimentation d'un moteur comportant un dispositif de démarrage selon l'invention,
- la figure 2 illustre un schéma d'équivalence d'un moteur électrique de type asynchrone,
- la figure 3 illustre le principe de régulation de courant avec un dispositif de démarrage tel qu'illustré sur la figure 1,
- la figure 4 est un ordinogramme décrivant l'enchaînement des principales étapes du procédé selon l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

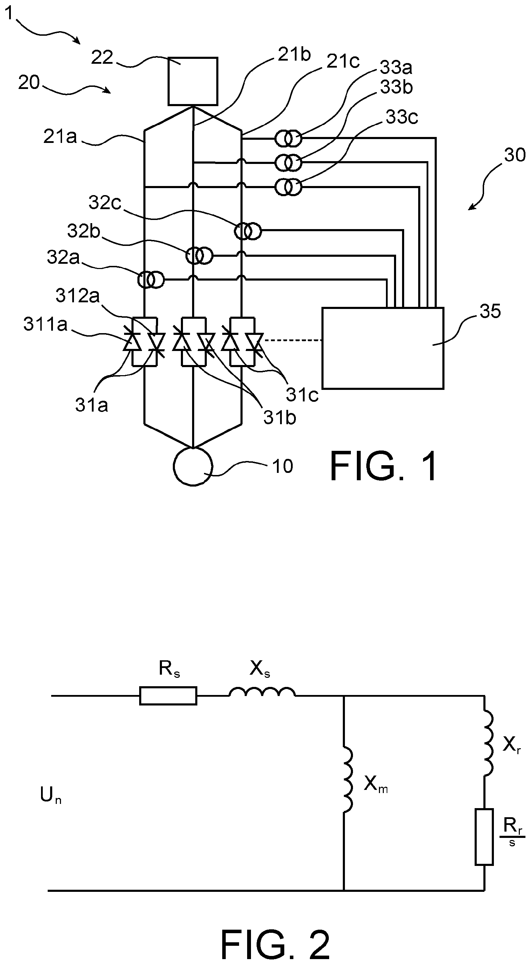

La figure 1 illustre une installation 1 comportant un moteur 10 électrique alternatif et un circuit d'alimentation 20 du moteur 10, un dispositif 30 de démarrage étant disposé entre le moteur 10 et le circuit d'alimentation 20 de manière à limiter l'appel de courant lors du démarrage du moteur 10.

Sur la figure 1, le circuit d'alimentation est un circuit d'alimentation 20 triphasé qui alimente le moteur en courant au moyen de ses trois phases 21a, b, c et d'un transformateur 22.

Un tel dispositif de démarrage 30 comporte pour chaque phase du circuit d'alimentation :

- un interrupteur commandé 31a, b, c permettant de connecter et déconnecter le moteur 10 de ladite phase du circuit d'alimentation 20,
- un système de mesure du courant 32a, b, c d'alimentation,
- un système de mesure de la tension 33a, b, c d'alimentation.

Le dispositif de démarrage comporte en outre une unité de traitement et de commande 35 adaptée pour traiter les valeurs de tensions et de courants obtenues par les systèmes de mesure du courant 32a, b, c et de la tension 33a, b, c d'alimentation et pour commander sur la base de ces valeurs la commande des interrupteurs commandés 31a, b, c.

Chaque interrupteur commandé 31a, b, c comporte deux thyristors 311a, 312a tête bêche montés en parallèle tel que cela est illustré sur la figure 1. De cette manière, les thyristors 311a, 312a d'une phase du circuit d'alimentation sont aptes à connecter le moteur à ladite phase 21a, b, c du circuit d'alimentation 20 respectivement en alternance positive et négative en courant de cette dernière. L'unité de traitement et de commande 35 est configurée pour alimenter individuellement chacune des gâchettes, non référencées, des thyristors 311a, 312a et ainsi commander la fermeture de ces derniers lorsqu'ils sont alimentés avec l'alternance en tension adéquate de la phase correspondante.

Chaque interrupteur 31a, b, c forme ainsi un moyen de retard de l'alimentation du moteur 10 adapté pour retarder l'alimentation en courant du moteur avec un retard $t_{ret}$.

Les systèmes de mesure de la tension 33a, b, c d'alimentation sont agencés de manière à permettre sur chacune des phases du circuit d'alimentation, une mesure de tension en amont de l'interrupteur commandé 31a, b, c.

Les systèmes de mesure du courant 32a, b, c forment chacun un moyen de détermination du courant d'alimentation du moteur en amont de l'interrupteur correspondant 31a, b, c.

L'unité de traitement et de commande 35 est configurée pour, à partir des valeurs mesurées par les différents systèmes de mesure du courant et de la tension d'alimentation 32a, b, c et 33a, b, c, déterminer une résistance de l'ensemble interrupteurs/moteur dite résistance interrupteurs/moteurs. La détermination de cette résistance interrupteurs/moteur est préférentiellement faite selon un calcul de composante directe qui est une valeur des composantes symétriques. Une telle valeur présente l'avantage de fournir une valeur reflétant l'état du moteur selon les trois phases. Un tel calcul peut être obtenu à partir des étapes suivantes de :

- détermination, à partir des systèmes de mesure du courant et de la tension 32a, b, c et 33a, b, c, des valeurs fondamentales, à la fréquence du réseau, du courant en amont ou en aval et de la tension en amont des interrupteurs commandés 31 a, b, c,
- calcul à partir de ces valeurs fondamentales des composantes directes du courant et de la tension,
- division de la composante directe de la tension par la composante directe du courant de manière à obtenir la résistance directe.

Or la résistance des interrupteurs 31a, b, c ne variant pas en fonction de la vitesse de rotation du moteur 10, et la résistance des thyristors étant faible à l'état passant, donc négligeable, toute variation de la résistance interrupteurs/moteur correspond donc principalement à une variation de résistance du moteur. La figure 2 illustre ainsi un schéma d'équivalence ramené au stator d'un moteur 10 de type asynchrone pour lequel l'invention est particulièrement avantageuse. On peut voir que les composantes résistives d'un tel moteur 10 présentent deux contributions, une résistance statistique Rs (Résistance stator) et une résistance variable $\frac{Rr}{S}$ (Résistance rotor) qui est inversement proportionnelle au glissement du moteur s.

Lors du démarrage du moteur, le glissement du moteur s passe d'une valeur de 1, pour le moteur à l'arrêt, à une valeur typiquement inférieure à 1%, correspondant au moteur tournant à vitesse nominale. Il en résulte donc que lors du démarrage du moteur la valeur de la résistance rotor $\frac{Rr}{S}$ est multipliée par prés de 100 et qu'il est possible de déterminer à partir de la variation de la résistance du moteur si le moteur 10 a démarré, si le moteur 10 est en train d'accélérer ou encore si le moteur 10 tourne à une vitesse inférieure à sa vitesse nominale.

L'unité de traitement et de commande 35 est ainsi configurée pour mettre en œuvre une telle mesure de la variation de la résistance moteur pour déterminer un retard d'alimentation $t_{ret}$ du moteur lors d'un procédé de démarrage du moteur.

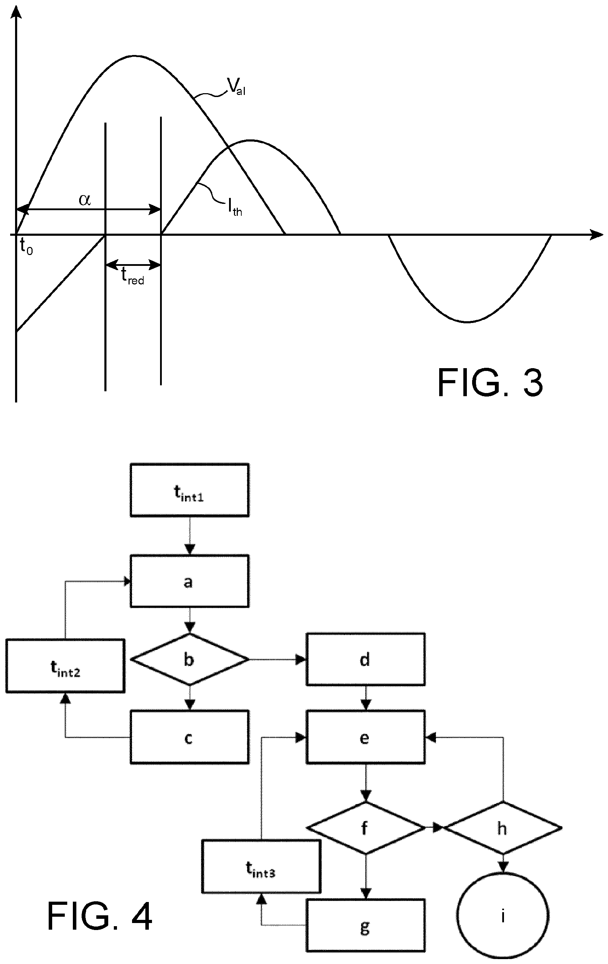

La figure 3 illustre le principe d'un tel procédé de démarrage du moteur 10 lorsque l'ajustement du retard $t_{ret}$ d'alimentation en courant du moteur 10 est du type alpha ($\alpha$) ceci pour une phase 21a, b, c donnée du circuit d'alimentation 20 lors d'une alternance positive en tension de cette phase.

L'unité de traitement et de commande 35 détecte à partir du système de mesure de la tension correspondant lorsque la tension de la phase passe à zéro en front montant. La détection de ce passage, t0 sur la figure 3, est la référence pour l'application du décalage angulaire $\alpha$ déterminant pour l'alimentation en courant de la gâchette du thyristor 32a correspondant à l'alternance positive. Ainsi, le thyristor 32a correspondant à l'alternance positive devient passant uniquement lorsque l'unité de traitement et de commande 35 commande sa fermeture en alimentant sa gâchette après le décalage angulaire a. Dans ces conditions, le moteur est alimenté en courant positif avec un retard $t_{ret}$ ce qui permet de limiter la montée en courant et donc de limiter l'amplitude de l'appel de courant lors du démarrage.

L'unité de traitement est configurée pour varier lors du démarrage du moteur le décalage angulaire $\alpha$, et donc du retard $t_{ret}$ en courant, selon le procédé de démarrage comportant la première et la deuxième séquence ci-dessous et dont l'enchaînement des étapes est décrit sur l'ordinogramme de la figure 4.

Après un temps d'initialisation $t_{int}1$, la première séquence de fonctionnement du procédé de démarrage comporte toutes les $n^{ièmes}$ périodes de la tension d'alimentation, n étant un entier supérieur à 0,

a) détermination de la valeur d'une variation de la résistance du moteur électrique à partir de la variation de la résistance interrupteurs/moteur,
b) comparaison de la valeur de variation de résistance du moteur déterminée avec une première valeur seuil de résistance,
c) si la valeur de la variation de la résistance du moteur est inférieure à la première valeur seuil, diminution de $t_{ret}$; puis un temps d'attente $t_{int}2$ intervient avant le retour à l'étape a).
d) si la valeur de la variation de la résistance du moteur déterminée est égale ou est supérieure à la première valeur seuil, passer à la deuxième séquence du procédé de démarrage.

La deuxième séquence comporte les étapes suivantes répétées toutes les $m^{ièmes}$ périodes de la tension d'alimentation, m étant un entier supérieur à 0 de :

e) détermination de la valeur d'une variation de la résistance du moteur,
f) comparaison de ladite valeur de variation de la résistance du moteur déterminée avec une deuxième valeur seuil de résistance,
g) si la valeur de la variation de résistance du moteur déterminée est inférieure à la deuxième valeur seuil de résistance, diminution de $t_{ret}$.

A chaque fois que l'étape g) est réalisée, l'unité de traitement et de commande 35 est configurée pour attendre un temps $t_{int}3$ avant de revenir à l'étape e).

Dans la deuxième séquence il est également prévu les étapes suivantes pour détecter quand le moteur est arrivé à sa vitesse de rotation nominale :

h) comparaison du courant d'alimentation du moteur à l'instant t par rapport à la valeur du courant d'alimentation du moteur à l'instant t-mT avec T la durée d'une période de la tension d'alimentation alternative,
i) si le courant d'alimentation du moteur à l'instant t est inférieur à la valeur du courant d'alimentation du moteur à l'instant t-mT, connecté directement le moteur au circuit d'alimentation, le moteur étant alors démarré.

Dans la première séquence le calcul de variation de résistance dans l'étape a) est un calcul de variation temporeiie relative tei que :

$$\frac{\frac{\Delta R}{R}(t)}{\Delta t} = \frac{\frac{R(t) - R(t - nT)}{R(t - nT)}}{nT}$$

avec R la résistance interrupteurs/moteur, T la durée d'une période de la tension d'alimentation et n le nombre de périodes de la tension d'alimentation entre deux répétitions de la première séquence, R(t) et R(t-nT) correspondant ainsi respectivement aux valeurs de résistance interrupteurs/moteur qui est calculée et qui a été calculée lors des répétitions précédentes de la première séquence.

De même dans la deuxième séquence le calcul de variation de résistance dans l'étape e) est un calcul de variation temporelle relative tel que :

$$\frac{\frac{\Delta R}{R}(t)}{\Delta t} = \frac{\frac{R(t) - R(t - mT)}{R(t - mT)}}{mT}$$

avec R la résistance interrupteurs/moteur, T la durée d'une période de la tension d'alimentation et m le nombre de périodes de la tension d'alimentation entre deux répétitions de la deuxième séquence est répétée, R(t) et R(t-mT) correspondant ainsi respectivement aux valeurs de résistance interrupteurs/moteur qui est calculée et qui a été calculée lors des répétitions précédentes de la deuxième séquence.

De manière à améliorer la qualité de la mesure de la résistance interrupteurs/moteur lors de la mesure de variation de résistance à l'étape e) et à limiter l'influence des oscillations de résistance du moteur 10 lorsque le moteur 10 est rentré en rotation, la valeur de résistance peut être une valeur traitée numériquement telle qu'une valeur moyenne, une valeur filtrée ou toute autre valeur obtenue avec un traitement permettant de limiter l'influence des oscillations du calcul de la résistance du moteur.

Dans une configuration classique, telle qu'illustrée sur la figure 1, et donc pour un circuit d'alimentation triphasé fonctionnant à 50Hz, c'est-à-dire avec une période de 20ms, le procédé ci-dessus peut être, par exemple, mis en œuvre avec les valeurs suivantes :

- le décalage angulaire $\alpha$ peut être d'environ 120°, c'est-à-dire 6,7ms, ce qui correspond donc à un retard $t_{ret}$ pour alimenter en courant le moteur de 6,7ms,
- n peut être égal à 2, c'est-à-dire que la première séquence est répétée toute les 40ms,
- à l'étape c), comme à l'étape g), le décalage angulaire $\alpha$ peut être diminué à chaque fois de 1,8°, c'est-à-dire de 100$\mu$s, ce qui correspond donc à une réduction du retard $t_{ret}$ de 100$\mu$s,
- m peut être égal à 1, ce qui correspond à une répétition de la deuxième séquence toutes les 20 millisecondes pour une fréquence de 50 Hz ; une moyenne de ces valeurs est réalisée sur les 50 dernières valeurs.

L'unité de traitement et de commande 35, en étant configurée pour faire varier lors du démarrage du moteur le décalage angulaire a, et donc du retard $t_{ret}$ en courant, selon le procédé de démarrage ci-dessus, est adaptée pour commander les moyens de retard, de détermination du courant et de détermination de la tension, et pour déterminer à partir des moyens de détermination du courant et de la tension d'alimentation du moteur la variation de résistance du moteur et pour modifier le retard $t_{ret}$ en fonction de la variation de résistance du moteur.

La configuration de l'unité de commande peut être obtenue au moyen d'un produit programme d'ordinateur comportant des instructions de code de programme pour l'exécution des étapes de détermination d'une variation d'une résistance du moteur, de comparaison de ladite variation à une valeur seuil de résistance et de diminution du retard $t_{ret}$ si la variation est inférieure à la valeur seuil selon le procédé de démarrage explicité ci-dessus.

On notera également que dans une configuration classique le temps d'initialisation $t_{int}$ 1, $t_{int}$ 2, $t_{int}$ 3 sont indépendants.

Il est également à noter que si dans ce mode de réalisation, le dispositif de démarrage 20 comporte des systèmes de mesure du courant et de la tension du circuit d'alimentation, donc en amont des interrupteurs il est également envisageable, ceci sans sorte du cadre de l'invention, que le dispositif de démarrage 20 comporte des systèmes de mesure de la tension et du courant en aval des interrupteurs de manière à autoriser une détermination directe de la variation de résistance du moteur 10.

## Revendications

1. Procédé de démarrage d'un moteur (10) électrique alimenté par une tension d'alimentation alternative, ledit procédé consistant à chaque période de la tension d'alimentation à alimenter en courant le moteur (10) avec un retard $t_{ret}$, ledit procédé de démarrage comportant une première séquence dans laquelle toutes les $n^{ièmes}$ périodes de la tension d'alimentation, n étant un entier supérieur à 0, les étapes suivantes sont réalisées :

   a) détermination de la valeur d'une variation d'une résistance du moteur durant les n périodes précédentes de la tension d'alimentation,
   b) comparaison de la valeur de variation de la résistance du moteur déterminée avec une première valeur seuil de résistance,
   c) si la valeur de la variation de la résistance du moteur est strictement inférieure à la première valeur seuil, diminution du retard $t_{ret}$,

d) si la valeur de la variation de la résistance du moteur déterminée est égale ou est supérieure à la première valeur seuil, passer à une deuxième séquence du procédé de démarrage,

dans lequel les étapes a) à c) sont mises en œuvre qu'après une durée initiale $t_{int}1$.

2. Procédé de démarrage selon la revendication 1 dans lequel l'étape a) est une étape de détermination d'une variation temporelle relative de la résistance

$$\frac{\frac{\Delta R}{R}(t)}{\Delta t},$$

du moteur ladite variation temporelle relative étant préférentiellement calculée à partir de l'équation suivante :

$$\frac{\frac{\Delta R}{R}(t)}{\Delta t} = \frac{\frac{R(t) - R(t - nT)}{R(t - nT)}}{nT}$$

avec R(t) une valeur relative à la résistance du moteur déterminée à un instant t et T la durée d'une période de la tension d'alimentation alternative.

3. Procédé de démarrage selon la revendication 1 ou 2, dans lequel après une diminution du retard $t_{ret}$, la première séquence est répétée après un temps d'attente $t_{int}2$ préférentiellement égal à $t_{int}1$.

4. Procédé de démarrage selon l'une quelconque des revendications 1 à 3, dans lequel la deuxième séquence comportant les étapes suivantes réalisées toutes les $m^{ièmes}$ périodes de la tension d'alimentation, m étant un entier supérieur à 0 :

e) détermination de la valeur d'une variation de la résistance du moteur,
f) comparaison de ladite valeur de variation de la résistance du moteur déterminée avec une deuxième valeur seuil de résistance,
g) si la variation de résistance du moteur déterminée est inférieure à la deuxième valeur seuil de résistance, diminution de $t_{ret}$.

5. Procédé de démarrage selon la revendication 4, dans lequel lors de l'étape e) il est également déterminé à partir de la variation de la résistance du moteur une accélération ou une vitesse du moteur (10).

6. Procédé de démarrage selon la revendication 4 ou 5 dans lequel dans l'étape e) la variation de la valeur résistance déterminée est une valeur traitée numériquement sur au moins deux périodes de la tension d'alimentation, le traitement numérique de ladite valeur traitée numériquement étant sélectionné dans le groupe comportant le calcul d'une valeur moyenne, l'application d'un filtre et l'application d'un traitement apte à limiter l'influence des oscillations du calcul de la résistance du moteur.

7. Procédé de démarrage selon l'une quelconque des revendications 4 à 6, dans lequel l'étape f) est une étape de détermination de la valeur de variation temporelle relative de la résistance du moteur préférentiellement calculée à partir de l'équation suivante :

$$\frac{\frac{\Delta R}{R}(t)}{\Delta t} = \frac{\frac{R(t) - R(t - mT)}{R(t - mT)}}{mT}$$

avec R(t) la valeur résistance du moteur déterminée à un instant t et T la durée d'une période de la tension d'alimentation alternative.

8. Procédé de démarrage selon l'une quelconque des revendications 4 à 7 dans lequel il est en outre prévu dans la deuxième séquence les étapes supplémentaires suivantes :

h) comparaison du courant d'alimentation du moteur (10) à l'instant t par rapport à la valeur du courant d'alimentation du moteur (10) à l'instant t-mT avec T la durée d'une période de la tension d'alimentation alternative,
i) si le courant d'alimentation du moteur (10) à l'instant t est inférieur à la valeur du courant d'alimentation du moteur (10) à l'instant t-mT, connexion directe du moteur au circuit d'alimentation, le moteur (10) étant alors démarré,

si le courant d'alimentation du moteur (10) à l'instant t n'est pas inférieur à la valeur du courant d'alimentation du moteur (10) à l'instant t-Tm, poursuite de la deuxième séquence.

9. Procédé de démarrage selon l'une quelconque des revendications 4 à 8, dans lequel si à l'étape g) le retard $t_{ret}$ est diminué et la deuxième valeur seuil de résistance augmentée, il est prévu un temps d'attente $t_{int}3$ avant de répéter la deuxième séquence.

10. Dispositif de démarrage d'un moteur (10) électrique alimenté par une tension d'alimentation alternative, ledit dispositif comportant :

- des moyens de retard de l'alimentation du moteur (10) adapté pour à chaque période de la tension d'alimentation à alimenter en courant le moteur (10) avec un retard $t_{ret}$,

- des moyens de mesure du courant d'alimentation du moteur (10) en aval ou en amont des moyens de retard,
- des moyens de détermination de la tension d'alimentation du moteur (10) en amont ou en aval des moyens de retard,
- une unité de traitement et de commande (35) adaptée pour commander les moyens de retard, de détermination du courant et de détermination de la tension,

le dispositif **étant caractérisé en ce que** l'unité de traitement et de commande est adaptée pour déterminer à partir des moyens de détermination du courant et de la tension d'alimentation du moteur la variation de résistance du moteur et pour modifier le retard $t_{ret}$ en fonction de la variation de résistance du moteur suivant un procédé selon l'une quelconque des revendication 1 à 9.

11. Produit programme d'ordinateur comportant des instructions de code de programme pour l'exécution des étapes de détermination d'une variation d'une résistance du moteur, de comparaison de ladite variation à une valeur seuil de résistance et de diminution du retard $t_{ret}$ si la variation est inférieure à la valeur seuil selon l'une quelconque des revendications 1 à 9.

**Patentansprüche**

1. Verfahren zum Starten eines Elektromotors (10), der mit einer Versorgungswechselspannung versorgt wird, wobei das Verfahren darin besteht, den Motor (10) bei jeder Periode der Versorgungsspannung mit einer Verzögerung $t_{ret}$ mit Strom zu versorgen, wobei das Startverfahren eine erste Sequenz umfasst, bei der alle n-ten Perioden der Versorgungsspannung mit n gleich einer ganzen Zahl größer als 0 die folgenden Schritte erfolgen:

   a) Ermitteln des Wertes einer Änderung eines Motorwiderstands während der n vorherigen Perioden der Versorgungsspannung,
   b) Vergleichen des ermittelten Wertes der Änderung des Motorwiderstands mit einem ersten Widerstandsschwellenwert,
   c) dann, wenn der Wert der Änderung des Motorwiderstands strikt unter dem ersten Schwellenwert liegt, Vermindern der Verzögerung $t_{ret}$,
   d) dann, wenn der ermittelte Wert der Änderung des Motorwiderstands gleich oder größer als der erste Schwellenwert ist, Übergehen zu einer zweiten Sequenz des Startverfahrens,

   wobei die Schritte a) bis c) erst nach einer anfänglichen Zeitspanne $t_{int}1$ erfolgen.

2. Startverfahren nach Anspruch 1, wobei der Schritt a) ein Schritt des Ermittelns einer relativen zeitlichen Änderung des Motorwiderstands

$$\frac{\frac{\Delta R}{R}(t)}{\Delta t}$$

ist, wobei die relative zeitliche Änderung vorzugsweise ausgehend von der folgenden Gleichung berechnet wird:

$$\frac{\frac{\Delta R}{R}(t)}{\Delta t} = \frac{\frac{R(t) - R(t - nT)}{R(t - nT)}}{nT}$$

mit R(t) als auf den Motorwiderstand bezogener Wert, der zu einem Zeitpunkt t ermittelt wird, und mit T als Zeitspanne einer Periode der Versorgungswechselspannung .

3. Startverfahren nach Anspruch 1 oder 2, wobei nach einer Verminderung der Verzögerung $t_{ret}$ die erste Sequenz nach einer Wartezeit $t_{int}2$ wiederholt wird, die vorzugsweise gleich $t_{int}1$ ist.

4. Startverfahren nach einem der Ansprüche 1 bis 3, wobei die zweite Sequenz die nachstehenden Schritte umfasst, die alle m-ten Perioden der Versorgungsspannung erfolgen, wobei m eine ganze Zahl größer als 0 ist:

   e) Ermitteln des Wertes einer Änderung des Motorwiderstands,
   f) Vergleichen des ermittelten Wertes der Änderung des Motorwiderstands mit einem zweiten Widerstandsschwellenwert,
   g) dann, wenn die ermittelte Änderung des Motorwiderstands unter dem zweiten Schwellenwert liegt, Vermindern von $t_{ret}$.

5. Startverfahren nach Anspruch 4, wobei in Schritt e) ausgehend von der Änderung des Motorwiderstands auch eine Beschleunigung bzw. eine Drehzahl des Motors (10) ermittelt wird.

6. Startverfahren nach Anspruch 4 oder 5, wobei in Schritt e) die ermittelte Änderung des Widerstandswerts ein Wert ist, der über zumindest zwei Perioden der Versorgungsspannung digital verarbeitet wird, wobei die digitale Verarbeitung des digital verarbeiteten Wertes ausgewählt wird aus der Gruppe umfassend das Berechnen eines Durchschnittswertes, das Anwenden eines Filters und das Anwenden einer Verarbeitung, die dazu geeignet ist, den Einfluss von Schwankungen bei der Berechnung des Motorwiderstands zu begrenzen.

**7.** Startverfahren nach einem der Ansprüche 4 bis 6, wobei der Schritt f) ein Schritt des Ermittelns des relativen zeitlichen Änderungswerts des Motorwiderstands ist, der vorzugsweise ausgehend von der nachstehenden Gleichung berechnet wird:

$$\frac{\frac{\Delta R}{R}(t)}{\Delta t} = \frac{\frac{R(t) - R(t - mT)}{R(t - mT)}}{mT}$$

mit R(t) als Motorwiderstandswert, der zu einem Zeitpunkt t ermittelt wird, und mit T als Zeitspanne einer Periode der Versorgungswechselspannung.

**8.** Startverfahren nach einem der Ansprüche 4 bis 7, wobei ferner bei der zweiten Sequenz die nachstehenden zusätzlichen Schritte vorgesehen sind:

h) Vergleichen des Versorgungsstroms des Motors (10) zum Zeitpunkt t mit dem Wert des Versorgungsstroms des Motors (10) zum Zeitpunkt t-mT mit T als Zeitspanne einer Periode der Versorgungswechselspannung,
i) dann, wenn der Versorgungsstrom des Motors (10) zum Zeitpunkt t geringer ist als der Wert des Versorgungsstroms des Motors (10) zum Zeitpunkt t-mT, direktes Verbinden des Motors mit dem Versorgungsstromkreis, wobei der Motor (10) dann gestartet wird,

dann, wenn der Versorgungsstrom des Motors (10) zum Zeitpunkt t nicht geringer ist als der Wert des Versorgungsstroms des Motors (10) zum Zeitpunkt t-mT, Fortsetzen der zweiten Sequenz.

**9.** Startverfahren nach einem der Ansprüche 4 bis 8, wobei dann, wenn in Schritt g) die Verzögerung $t_{ret}$ vermindert wird und der zweite Widerstandsschwellenwert erhöht wird, eine Wartezeit $t_{int}3$ vor dem Wiederholen der zweiten Sequenz vorgesehen ist.

**10.** Vorrichtung zum Starten eines Elektromotors (10), der mit einer Versorgungswechselspannung versorgt wird, wobei die Vorrichtung enthält:

- Einrichtungen zum Verzögern der Versorgung des Motors (10), die dazu geeignet sind, bei jeder Periode der Versorgungsspannung den Motor (10) mit einer Verzögerung $t_{ret}$ mit Strom zu versorgen,
- Einrichtungen zum Messen des Versorgungsstroms des Motors (10), die den Verzögerungseinrichtungen vor- oder nachgeschaltet sind,
- Einrichtungen zum Messen der Versorgungsspannung des Motors (10), die den Verzögerungseinrichtungen vor- oder nachgeschaltet sind,
- eine Verarbeitungs- und Steuereinheit (35), die dazu geeignet ist, die Einrichtungen zum Verzögern, zum Ermitteln des Stroms und zum Ermitteln der Spannung zu steuern,

wobei
die Vorrichtung **dadurch gekennzeichnet ist, dass** die Verarbeitungs- und Steuereinheit dazu geeignet ist, ausgehend von den Einrichtungen zum Ermitteln des Stroms und der Versorgungsspannung des Motors die Änderung des Motorwiderstands zu ermitteln und die Verzögerung $t_{ret}$ in Abhängigkeit von der Änderung des Motorwiderstands gemäß einem Verfahren nach einem der Ansprüche 1 bis 9 zu verändern.

**11.** Computerprogrammprodukt mit Programmcodeanweisungen zum Ausführen der Schritte des Ermittelns einer Änderung eines Motorwiderstands, des Vergleichens der Änderung mit einem Widerstandsschwellenwert und des Verminderns der Verzögerung $t_{ret}$ dann, wenn die Änderung geringer ist als der Schwellenwert, nach einem der Ansprüche 1 bis 9.

**Claims**

**1.** Method of starting an electric motor (10) powered by an alternating power supply voltage, said method consisting of supplying current to the motor (10) during each voltage supply period with a delay $t_{ret}$, said starting method comprising a first sequence in which the following steps are carried out in each $n^{th}$ period of the power supply voltage, where n is an integer number greater than 0:

a) determine the value of a variation of a resistance of the electric motor during the previous n periods of the power supply voltage,
b) compare said value of the variation of the determined motor resistance with a first threshold resistance value,
c) if the value of the variation of the motor resistance is less than the first threshold value, reduce the delay $t_{ret}$,

wherein steps a) to c) are applied after an initial duration $t_{int}1$..

**2.** Starting method according to claim 1 in which step a) is a step to determine a relative variation in time

$$\frac{\frac{\Delta R}{R}(t)}{\Delta t},$$

of the motor resistance said relative time variation preferably being calculated using the following equation:

$$\frac{\frac{\Delta R}{R}(t)}{\Delta t} = \frac{\frac{R(t) - R(t - nT)}{R(t - nT)}}{nT}$$

where R(t) is a value related to the motor resistance determined at instant t and T is the duration of a period of the alternating power supply voltage.

3. Starting method according to any one of claims 1 to 2, in which after a reduction in the delay $t_{ret}$, the first sequence is repeated after a waiting time $t_{int}2$ preferably equal to $t_{int}1$.

4. Starting method according to any one of claims 1 to 3 the first sequence of which includes the following additional step:
   d) if the value of the variation in the determined motor resistance is equal to or greater than the first threshold value, go on to a second sequence in the starting method,
   said second sequence comprising the following steps performed every $m^{th}$ period of the power supply voltage, where m is an integer more than 0:

   e) determine the value of a variation in the motor resistance,
   f) compare said value of the variation of the determined motor resistance with a second threshold resistance value,
   g) if the variation in the determined resistance of the motor is less than that the second threshold resistance value, reduce $t_{ret}$.

5. Starting method according to claim 4, in which during step e), an acceleration or speed of the motor (10) is also determined from the variation in the motor resistance.

6. Starting method according to claim 4 or 5 in which in step e), the variation of the determined resistance value is a value corrected over at least two periods of the power supply voltage, the correction of said value corrected being selected in the group comprising calculating an average value, applying a filter and applying a correction adapted to reduce the influence of the oscillation of the calculation of the motor resistance.

7. Starting method according to any one of claims 4 to 6, in which step f) is a step to determine the value of the relative variation of the motor resistance in time, preferably calculated using the following equation:

$$\frac{\frac{\Delta R}{R}(t)}{\Delta t} = \frac{\frac{R(t) - R(t - mT)}{R(t - mT)}}{mT}$$

where R(t) is the resistance value of the motor determined at instant t and T is the duration of a period of the alternating power supply voltage.

8. Starting method according to any one of claims 4 to 7 in which the following additional step is also included in the second sequence:

   h) compare the power supply current to the motor (10) at instant t with the value of the power supply current to the motor (10) at instant t-mT where T is the duration of a period of the alternating power supply voltage,
   i) if the power supply current to the motor (10) at instant t is less than the value of the power supply current to the motor (10) at instant t-mT, connect the motor to the power supply circuit directly, and the motor (10) is then started,

   if the power supply current to the motor (10) at instant t is not inferior to the value of the power supply current to the motor (10) at instant t-Tm, continue the second sequence.

9. Starting method according to any one of claims 5 to 9, in which if the delay $t_{ret}$ is reduced in step g) and the second threshold resistance value is increased, a waiting time $t_{int}3$ is defined before repeating the second sequence.

10. Device for starting an electric motor (10) powered by an alternating power supply voltage, said device comprising:

    - means of delaying the power supply to the motor (10) adapted to delay the motor power supply with a delay $t_{ret}$,
    - means of measuring the power supply current to the motor (10) on the output or input side of the delay means,
    - means of determining the power supply voltage to the motor (10) on the input or output side of the delay means,
    - a processing and control unit (35) adapted to control the delay, and the current determination and voltage determination means,

    the device **being characterised in that** the processing and control unit is adapted to determine the variation in the motor resistance and to modify the delay $t_{ret}$ as a function of the variation of the motor resistance using a method according to one of claims 1 to 9.

11. Computer program comprising program code instructions to run steps to determine a variation of a motor resistance, to compare said variation with a threshold resistance value and to reduce the delay $t_{ret}$ if the variation is less than the threshold value according to any one of claims 1 to 9.

FIG. 1

FIG. 2

FIG. 3

FIG. 4

## RÉFÉRENCES CITÉES DANS LA DESCRIPTION

**Documents brevets cités dans la description**

- EP 2403132 A2

- US 2011148332 A